(19) Europäisches Patentamt

European Patent Office

Office européen des brevets

(11) Veröffentlichungsnummer: **0 190 405 B1**

(12) **EUROPÄISCHE PATENTSCHRIFT**

(45) Veröffentlichungstag der Patentschrift:
**01.06.88**

(21) Anmeldenummer: **85114082.2**

(22) Anmeldetag: **05.11.85**

(51) Int. Cl.⁴: **B 65 H 67/06**, B 65 G 47/14

(54) Vorrichtung zum Entnehmen einzelner Textilhülsen aus Behälter.

(30) Priorität: **29.01.85 CH 380/85**

(43) Veröffentlichungstag der Anmeldung:
**13.08.86 Patentblatt 86/33**

(45) Bekanntmachung des Hinweises auf die Patenterteilung:
**01.06.88 Patentblatt 88/22**

(84) Benannte Vertragsstaaten:
**CH DE FR GB IT LI**

(56) Entgegenhaltungen:
**DE - A - 1 760 065**
**DE - A - 1 917 329**
**DE - A - 3 336 958**
**GB - A - 1 142 830**
**US - A - 3 328 948**

(73) Patentinhaber: **MASCHINENFABRIK RIETER AG,**
**Postfach 290, CH-8406 Winterthur (CH)**

(72) Erfinder: **Würmli, Arthur, Landvogt-Waserstrasse 93,**
**CH-8405 Winterthur (CH)**

# Beschreibung

Die vorliegende Erfindung bezieht sich auf eine Vorrichtung gemäss dem Oberbegriff des Patentanspruchs 1.

Es ist bekannt, dass bei diesen Vorrichtungen in der Bodenpartie des Behälters sich die Hülsen ineinander verklemmen und dabei «Brücken» bilden können. Wenn dieser Fall eintritt, wird das Nachliefern von Hülsen unterbrochen, trotzdem im Behälter noch solche vorhanden sind.

Eine Vorrichtung gemäss dem Oberbegriff des Patentanspruchs 1 ist durch die deutsche Offenlegungsschrift Nr. 1 535 069 bekannt, welche einen Hülsenbehälter mit einer abgeschrägten Wandfläche des Zuführungstrichters, längs welcher die Hülsen zu einem Füllschacht rollen, zeigt. Um vor dem Eingang des Füllschachtes eine Brückenbildung zu vermeiden, ist ein Störschieber vorgesehen, welcher durch einen Hilfsmotor und eine Kurbel angetrieben wird zum Zwecke, die Hülsen aufzulockern. An Stelle eines Störschiebers können auch Zapfen bewegt werden, oder kann eine Seitenfläche schwingbar gelagert sein.

Gemäss der USA-Patentschrift Nr. 3 328 948 werden die Hülsen mittels Stäben in Bewegung versetzt. Die Stäbe sind auf einem, durch einen Motor angetriebenen, rotierenden Rad aufgesetzt.

Die USA-Patentschrift Nr. 3 476 328 zeigt eine Schwingplatte, auf welcher sich Spulen befinden und welche durch Nocken betätigt wird.

Die GB-Patentschrift 1 142 830 zeigt eine fix gelagerte in Rotation versetzte, polygonale Störwalze, welche in einem Förderkanal für Ampullen angeordnet ist und durch ihre erzwungene Rotation dafür sorgen soll, dass die Ampullen keine Brücke bilden können.

Die DE Offenlegungsschrift 1 917 329 zeigt ebenfalls in einer Vorrichtung zum Vereinzeln von Textilspulen eine Störwalze mit dreieckigem Querschnitt, welche bei jedem Schaltschritt des Muldentransportes eine hin- und hergehende Schwenkbewegung von ca. 60° ausführt. Für die Ausführung dieser Schwenkbewegung ist die Störwalze mit einem komplizierten Gestängesystem gekuppelt, mit welchem Bewegungsart und Schwenkung der Störwalze den verschiedenen Verhältnissen angepasst werden können.

In der Kops- und Spulentransportieranlage nach der DE-A-3 336 958 ist, zum Verhindern eines Steckenbleibens der sich einer Austragsführung am unteren Ende eines Trichters nähernden Spulen, der Spulentrichter mit einer schwenkbaren Nivellier- oder Rüttelplatte und einer Störplatte versehen.

Die Rüttelplatte wird mittels eines Motors und entsprechenden Antriebsorganen hin- und herbewegt.

Alle diese bekannten Einrichtungen haben die Nachteile, dass sie ein spezielles Antriebsaggregat benötigen und von relativ aufwendigem Aufbau, d.h. relativ kostspielig sind. In den Fällen, in denen die die Hülsen auflockernden Teile Schwingungen ausführen, ergibt sich der Nachteil, dass diese Schwingungen andererseits als Erschütterungen wirken können, durch welche an sich raumfeste Teile der Maschine locker werden.

Diese Nachteile sollen gemäss der Erfindung vermieden werden. Diese weist die im kennzeichnenden Teil des Patentanspruchs 1 angegebenen Merkmale auf.

Die Erfindung besitzt die Vorteile, dass das Bilden von Brücken durch die Hülsen eliminiert ist und eine ununterbrochene Einspeisung von Hülsen erhalten wird. Zusätzlich ist die vorliegende Erfindung von verblüffender Einfachheit. Die Tatsache, dass sich die erwähnte, verbesserte Arbeitsweise mit dermassen einfachen Mitteln erreichen lässt, stellt zweifellos einen überraschenden Effekt dar.

Eine vollständige Erklärung der Ursachen für diese Wirkungsweise kann nicht gegeben werden. Ein wesentliches Merkmal wird jedoch darin gesehen, dass sich die Störstange mit den sich in Bewegung befindlichen Hülsen sowohl seitlich, auf- und abwärts und auch drehend mitbewegt und diese Bewegungen an die an sie anliegenden Hülsen, insbesondere an die über ihr liegenden Hülsen, weitergibt. Dadurch wird das Bilden von Brücken schon im Anfangsstadium unterbunden. Es dürfte auch die Inhomogenität, welche der Stab innerhalb der Gesamtzahl der Hülsen bildet, eine Rolle spielen. Diese Inhomogenität beruht beispielsweise darin, dass die Bewegungen der Stange, im Gegensatz zu denen der Hülsen, nur um kleine Strecken möglich sind.

Die sich auf der Höhe der Störstange befindlichen Hülsen werden durch diese Stange zudem zweigeteilt. Dies hat zur Folge, dass zum Entstehen einer die Hülsen blockierenden Brücke, sich Teilbrücken auf beiden Seiten der Störstange gleichzeitig bilden müssen. Falls sich auf nur einer Seite der Stange eine Teilbrücke gebildet hat, so ergibt die Bildung einer zweiten Teilbrücke auf der andern Seite der Stange auf der Letzteren eine Belastungsänderung, womit eine Bewegung der Stange und damit ein Zusammenbrechen der ersten Teilbrücke eintritt. Damit ist das Bilden einer Brücke in Kombination mit der Störstange sehr unwahrscheinlich und tritt praktisch nie ein.

Es scheint ausserdem, dass die Störstange die Hülsen im Behälter beeinflusst, sich parallel zu ihr auszurichten. Damit dürfte sich als weiterer Vorteil vorliegender Erfindung ergeben, dass durch das Vorsehen der Störstange dem Entstehen von Querlagen der Hülsen und damit von durch solche Querlagen hervorgerufenen Fehloperationen entgegengewirkt wird.

Im Weiteren dürfte von Bedeutung sein, dass die Hülsen an der Störstange leicht gleiten, d.h. dass Stange und Hülsen nur schwach aneinander haften.

Die Anwendung der Erfindung ist bei sogenannten Einweghülsen, welche bekanntlich eine grössere Neigung zu Brückenbildung als steife Mehrweghülsen haben, von besonderem Vorteil. Die oben erwähnte, durch die Stange verursachte Inhomogenität ist verstärkt, wenn die Stange nicht rund, sondern von eckiger Form ist. In diesem Fall gibt die Stange ihre Bewegungen in besonders starkem Masse weiter. Die Praxis hat jedoch gezeigt, dass auch mit einer runden Stange die erfindungsgemässen Vorteile erhalten werden.

Die Erfindung sei nun an Hand eines Ausführungsbeispiels und der Zeichnung näher erläutert. In der Letzteren ist

Fig. 1 ein Querschnitt einer erfindungsgemässen Vorrichtung und

Fig. 2 ein Schnitt längs der Linie II ... II der Fig. 1, von oben gesehen.

In den Figuren sind gleiche Teile mit gleichen Bezugszeichen versehen.

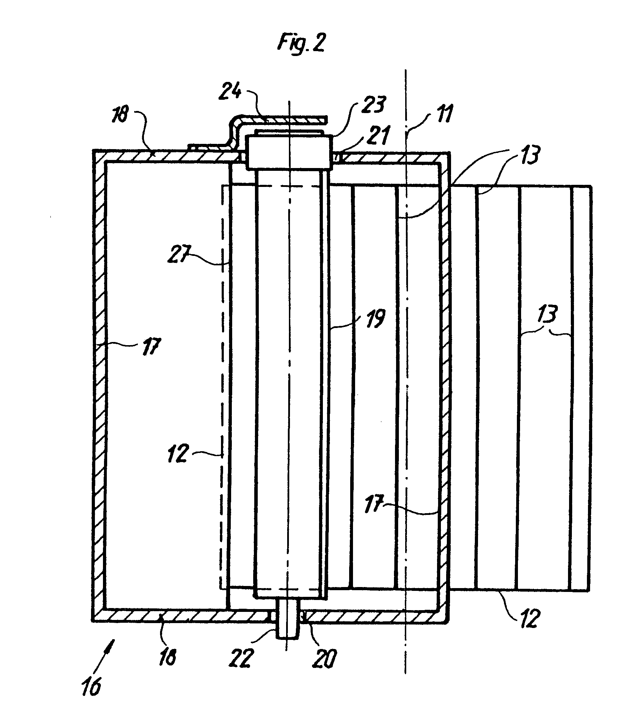

Eine um eine Achse 11 drehbare Trommel 12 ist mit Taschen 13 versehen, welche zur Aufnahme und zum Wegführen einzelner Hülsen 14 dienen. Die Trommel 12 ist in Richtung des Pfeiles 15 rotierbar. Über der Trommel 12 befindet sich ein Behälter 16 mit in diesem eingefüllten Hülsen 14. Der Übersichtlichkeit wegen sind die Hülsen in Fig. 2 nicht gezeichnet. Diese sind im allgemeinen konisch geformt, liegen aber im Wesentlichen parallel zueinander und zu den Breitseiten 17 des Behälters 16. Dessen Längsseiten sind mit 18 bezeichnet.

Eine Störstange 19 ist in Lagern 20, 21, welche in den Längsseiten 18 angebracht sind, gelagert. In Fig. 2 sind zwei verschiedene Lagerungen gezeigt. An ihrem einen Ende ist die Störstange 19 mit einer Welle 22 versehen, welche vom Lager 20 gehalten ist. An ihrem Ende weist sie eine kreiszylindrische Rolle 23 auf, welche in das Lager 21 eingesetzt ist. Eine Deckplatte 24 hindert die Stange 19 daran, sich in achsialer Richtung zu verschieben. Der Durchmesser des Lagers 20 ist grösser als der Durchmesser der Welle 22 und der Durchmesser des Lagers 21 ist grösser als derjenige der Rolle 23. Das heisst, die horizontal und im Innern des Behälters 16 angeordnete Störstange 19 ist allseitig mit Spiel und frei drehbar gelagert. Durch die gezeigte Konstruktion wird ein leichter Ein- und Ausbau der Störstange 19 angestrebt, wobei die Deckplatte 24 wegnehmbar ist.

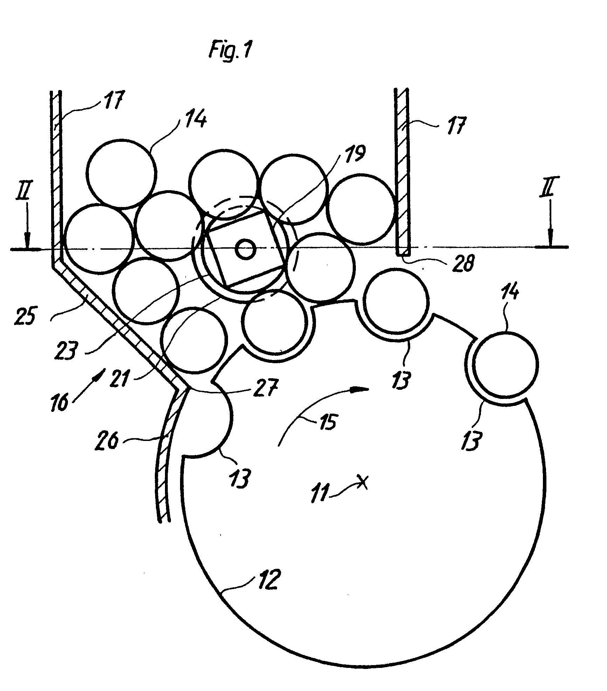

Die Bodenpartie des Behälters 16 weist eine zu dessen Längsseiten 18 senkrecht stehende Bodenfläche 25 auf. Von dieser setzt sich eine die Trommel 12 bedeckende Verschalung 26 fort, welche mit der Bodenfläche 25 eine Kante 27 bildet. Die Bodenpartie weist eine Öffnung auf, die sich von der Kante 27 bis zum untern Rand 28 der in Fig. 1 rechten Breitseite 17 erstreckt.

Im Betrieb der Vorrichtung dreht sich die Trommel 12 in der durch den Pfeil 15 gezeigten Drehrichtung. Wenn eine leere Tasche 13 sich über die sich zwischen Kante 27 und Rand 28 erstreckende Öffnung bewegt, so fällt eine Hülse 14 in diese hinein und wird von ihr mitgenommen. Nachdem diese Hülse sich unter dem Rand 28 hindurchbewegt hat, wird sie von der Trommel 12 durch nicht gezeigte Mittel zu ihrer nachfolgenden Einsatzstelle weiterbefördert.

Wie bereits eingangs erwähnt wurde, ist es bekannt, dass ein Verklemmen der Hülsen 14 in der Weise vorkommen kann, in der die Hülsen sogenannte «Brücken» bilden. Dabei gelangen die Hülsen 14 in eine Lage, in der sie zwischen der in Fig. 1 rechten Breitseite 17 und der Bodenfläche 25 in der Weise gegeneinander zu liegen kommen, in der sie sich gegenseitig am weitern Hinunterbewegen hindern. Unter diesen Umständen gelangen keine Hülsen 14 mehr in die Taschen 13, obwohl sich unter Umständen noch viele Hülsen 14 im Behälter 16 befinden.

Um dieses Bilden von Brücken zu vermeiden, ist die Störstange 19 vorgesehen. Diese wird durch die sich bewegenden Hülsen 14 in Bewegung gehalten und gibt diese Bewegung insbesondere an die über ihr liegenden Hülsen 14 weiter. Dies dürfte vor allem deshalb der Fall sein, weil, im Gegensatz zu den Hülsen, die Stange 19 sich nicht beliebig nach unten bewegen kann; denn sie ist in den Lagern 20, 21 gehalten. Falls keine Stange 19 vorhanden wäre, könnte es vorkommen, dass die Hülsen 14 als eine relativ einheitliche Gesamtheit sich zwischen den Breitseiten 17 nach unten bewegen. Durch die Bodenfläche 25 werden sie darauffolgend zusammengedrückt, was die Ursache für die Brückenbildung ist. Es dürfte berechtigt sein, anzunehmen, die Stange 19 stehe einem solchen, relativ ruhigen Absinken im Wege; denn die absinkenden Hülsen 14 stossen an diese Stange 19 an und bewirken eine ständige Unruhe derselben.

Es dürfte naheliegend sein, dass eine Stange von eckigem Querschnitt mehr zu Bewegungen neigt als eine solche runden Querschnitts. Die Stange 19 besitzt gemäss Fig. 1 einen ungefähr quadratischen Querschnitt. In einer leicht abgeänderten Ausführungsform kann dieser dreieckig sein, oder eine noch andere Zahl von Ecken aufweisen. Die Störstange 19 kann auch als Rohr ausgebildet sein.

Als vorteilhafte Platzierung der Stange 19 hat es sich erwiesen, diese im Wesentlichen oberhalb der Mitte der sich in der Bodenpartie zwischen Kante 27 und Rand 28 erstreckenden Öffnung anzubringen. Überdies soll der Abstand der Stange 19 von der Mantelfläche der Trommel 12 mindestens einem Hülsendurchmesser und höchstens dem dreifachen Wert eines solchen gleich sein.

Für gewisse Ausbildungen der erfindungsgemässen Vorrichtung kann es sich empfehlen, mehr als eine Störstange vorzusehen. Dabei erfolgt die Wahl unter den verschiedenen Möglichkeiten der Anordnung dieser Stangen den vorliegenden Umständen entsprechend.

Als Material zur Herstellung der Störstange kommt vor allem Metall und Kunststoff in Betracht. Dabei sind die Gleiteigenschaften bzw die Reibung in Bezug auf die Hülsen ebenfalls zu berücksichtigen.

## Patentansprüche

1. Vorrichtung an einer Spinn- oder Zwirnmaschine zum Entnehmen einzelner Textilhülsen (14) aus einem Behälter (16) rechteckigen Querschnittes, in welchen die Hülsen (14) an dessen Breitseiten (17) und aneinander anliegend eingefüllt sind und dessen Bodenpartie eine Austrittsöffnung für die Hülsen (14) und mindestens eine zu den Längsseiten (18) des Behälters (16) senkrechte Bodenfläche (25) umfasst, welche sich von einer der Breitseiten (17), unter Verengung des Behälters (16), abgeschrägt nach unten zur Öffnung hin erstreckt, und die Vorrichtung ein Entnahmemittel (12) zum Wegführen einzelner, durch die Öffnung hindurchtretender Hülsen (14) umfasst, dadurch gekennzeichnet, dass eine Störstange (19) vorgesehen ist, welche horizontal und parallel zu den Breitseiten (17) des Behälters (16) im Bereich oberhalb der Öffnung, im Innern des Behälters (16) angeordnet und in dessen Längsseiten (18), allseitig mit Spiel und frei drehbar, gelagert ist und dass die Dicke der Stange (19) und die Dicken der Hülsen (14) von gleichem Mass sind.

2. Vorrichtung nach Anspruch 1, dadurch gekennzeichnet, dass sich die Stange (19) im wesentlichen oberhalb der Mitte der Öffnung befindet.

3. Vorrichtung nach Anspruch 1, dadurch gekennzeichnet, dass die Stange (19) sich in einer Entfernung von der Mantelfläche der Trennmittel (12) befindet, welche mindestens einem Hülsendurchmesser und höchstens dem dreifachen Wert eines solchen gleich ist.

4. Vorrichtung nach Anspruch 1, dadurch gekennzeichnet, dass die Stange (19) von eckigem Querschnitt ist.

5. Vorrichtung nach Anspruch 4, dadurch gekennzeichnet, dass die Stange (19) von im wesentlichen quadratischem Querschnitt ist.

6. Vorrichtung nach Anspruch 1, dadurch gekennzeichnet, dass die Stange als Rohr ausgebildet ist.

7. Vorrichtung nach Anspruch 1, dadurch gekennzeichnet, dass im Bereich oberhalb der Öffnung zusätzlich zur genannten Stange (19) noch mindestens eine weitere Störstange vorgesehen ist.

8. Vorrichtung nach Anspruch 1, dadurch gekennzeichnet, dass das Entnahmemittel eine um eine Achse (11) rotierbare Trommel (12) umfasst, welche über ihrem Umfang verteilte Taschen (13) zur Aufnahme von Hülsen (14) aufweist, dass die Achse (11) und Taschen (13) horizontal und zu den Breitseiten (17) des Behälters (16) parallel sind und die Mantelfläche der Walze (12) die Öffnung des Behälters (16) im wesentlichen überdeckt.

## Claims

1. Device on a spinning or twisting machine for removing individual textile tubes (14) from a container (16) of rectangular section in which the tubes (14) are filled engaging the transverse sides (17) and each other, the floor portion of the container comprising an outlet opening for the tubes (14) and at least one floor surface (25) at right angles to the longitudinal sides (18) of the container (16), which surface (25) extends downwardly at an inclination from one of the transverse sides (17) to the opening, with narrowing of the container (16), and the device comprises a removal means (12) for taking individual tubes passing through the opening, characterised in that, a disturbing rod (19) is provided, being arranged in the interior of the container (16) horizontal and parallel to the transverse sides (17) of the container (16) in the region above the opening, and is rotatably supported in the longitudinal sides thereof (18) to be freely rotatable and with free play on all sides, and in that the thickness of the rod (19) and the thicknesses of the tubes (14) are of the same order.

2. Device according to claim 1 characterised in that the rod (19) is located substantially above the middle of the opening.

3. Device according to claim 1 characterised in that the rod (19) is located at a spacing from the envelope surface of the separating means (12) equal to at least one tube diameter and at most three times that value.

4. Device according to claim 1 characterised in that the rod (19) is of rectangular section.

5. Device according to claim 4 characterised in that the rod (19) is of substantially square section.

6. Device according to claim 1 characterised in that the rod is formed as a tube.

7. Device according to claim 1 characterised in that in the region above the opening at least one further disturbing rod is provided in addition to the said rod (19).

8. Device according to claim 1 characterised in that the removing means comprises a drum (12) rotatable about an axis (11), the drum having pockets (13) distributed over its periphery to receive tubes (14), in that the axis (11) and pockets (13) are horizontal and parallel to the transverse sides (17) of the container (16) and the envelope surface of the roller (12) substantially covers the opening of the container (16).

## Revendications

1. Dispositif d'une machine à filer ou à retordre pour extraire individuellement des fuseaux de bobine (14) d'un réservoir (16) de section rectangulaire, dans lequel les fuseaux (14) emmagasinés reposent sur les parois larges (17) du réservoir (16), et les uns contre les autres, réservoir dont la partie de fond comprend une ouverture de sortie pour les fuseaux (14) et au moins une paroi de fond (25) qui est perpendiculaire aux parois longitudinales (18) du réservoir (16), paroi de fond qui s'étend en biais depuis une des parois larges (17) vers le bas en formant un étranglement de l'ouverture du réservoir (16), et le dispositif comprend un moyen d'extraction (12) pour extraire individuellement les fuseaux (14) qui pénètrent dans l'ouverture, caractérisé par le fait qu'une barre perturbatrice (19) est prévue et qu'elle est disposée d'une manière parallèle et horizontale aux parois larges (17) du réservoir (16) dans une zone située au-dessus de l'ouverture, et à l'intérieur du réservoir (16), et qu'elle est maintenue dans les parois longitudinales (18) de celui-ci avec un jeu de tous les côtés et en rotation libre, et que l'épaisseur de la barre (19) et les épaisseurs des fuseaux (14) sont de mêmes grandeurs.

2. Dispositif selon revendication 1, caractérisé par le fait que la barre (19) se trouve principalement au-dessus du milieu de l'ouverture.

3. Dispositif selon revendication 1, caractérisé par le fait que la barre (19) est située avec un éloignement par rapport à l'enveloppe du moyen d'extraction (12) qui correspond au moins à un diamètre de fuseau et au plus au triple de cette valeur.

4. Dispositif selon revendication 1, caractérisé par le fait que la barre (19) est de section angulaire.

5. Dispositif selon revendication 4, caractérisé par le fait que la barre (19) est essentiellement de section carrée.

6. Dispositif selon revendication 1, caractérisé par le fait que la barre (19) est formée comme un tuyau.

7. Dispositif selon revendication 1, caractérisé par le fait que, dans la zone située au-dessus de l'ouverture, une autre barre perturbatrice est au moins prévue en supplément à ladite barre (19).

8. Dispositif selon revendication 1, caractérisé par le fait que le moyen d'extraction comprend un tambour (12) en rotation autour d'un axe (11), tambour qui possède des poches (13) réparties sur sa circonférence pour la réception de fuseaux (14), que l'axe (11) et les poches (13) sont disposés d'une manière horizontale et parallèle aux parois larges (17) du réservoir (16), et que l'enveloppe du tambour (12) couvre principalement l'ouverture du réservoir (16).

Fig.1

Fig.2

0 190 405